Europäisches Patentamt

European Patent Office

Office européen des brevets

(11) Veröffentlichungsnummer: **0 202 672**
**A2**

# (12) EUROPÄISCHE PATENTANMELDUNG

(21) Anmeldenummer: **86106910.2**

(22) Anmeldetag: **21.05.86**

(51) Int. Cl.⁴: **H02G 15/10**

(30) Priorität: **24.05.85 DE 3518815**

(43) Veröffentlichungstag der Anmeldung:
**26.11.86 Patentblatt 86/48**

(84) Benannte Vertragsstaaten:
**AT BE CH DE FR GB IT LI NL SE**

(71) Anmelder: **Siemens Aktiengesellschaft Berlin
und München**
**Wittelsbacherplatz 2**
**D-8000 München 2(DE)**

(72) Erfinder: **Giebel, Wolfgang, Dipl.-Ing. (FH)**
**Mathildenstrasse 31a**
**D-8033 Planegg(DE)**
Erfinder: **Meixner, Heirich**
**Angerweg 4**
**D-8201 Halfing(DE)**

(54) **Vorrichtung zum Füllen von Hohlräumen, insbesondere bei Kabelgarnituren, mit Isolationsmasse und Verfahren zum Füllen dieser Hohlräume.**

(57) Bei der Erfindung handelt es sich um eine Vorrichtung zum Füllen von Hohlräumen (H), insbesondere bei Kabelgarnituren, mit Isolationsmasse (6). Die Isolationsmasse (6) ist in einem mit Öffnungsmitteln versehenen Behälter (2, 7, 10) eingebracht, der auf einer flexiblen Montagefolie (1) befestigt ist. Nach dem Umhüllen des Hohlraumes - (H) mit der Montagefolie (1) wird der nach einwärts gerichtete Behälter (2, 7, 10) durch das Öffnungsmittel (5, 8, 15) geöffnet, so daß mit Hilfe der Montagefolie (1) von außen her die freigegebene Isolationsmasse (6) in den Hohlraum (H) ohne Verschmutzung montagefreundlich eingeknetet werden kann.

FIG 1

Vorrichtung zum Füllen von Hohlräumen, insbesondere bei Kabelgarnituren, mit Isolationsmasse und Verfahren zum Füllen dieser Hohlräume

Die Erfindung betrifft eine Vorrichtung zum Füllen von Hohlräumen, insbesondere bei Kabelgarnituren, mit Isolationsmasse zum Schutz gegen Feuchtigkeit.

Aus der Druckschrift der Firma Siemens "Garnituren für Starkstromkabel 1 bis 30 kV" mit der Bestellnummer Ab9100-I11-A27 ist bekannt, daß Dichtungsmasse bzw. Isolationsmasse in Hohlräume bei Kabeleinführungen und auch bei Zwickelräumen zwischen Kabeladern eingebracht werden kann, wobei sich diese Isolationsmasse gut mit der Hand in diese Hohlräume einkneten läßt. Dieses Verfahren ist ohne Hilfsmittel nicht sehr angenehm und erfordert Geschick, da die Isolationsmasse sehr haftfähig ist. Auch sind aus dieser Druckschrift Methoden zum Füllen von Hohlräumen mit Hilfe von Zweikomponentenharzen angegeben. Doch diese Mittel sind relativ teuer und erfordern spezielle Gußformen, so daß sie nur in besonderen Einsatzfällen mit sehr hohen Ansprüchen verwendet werden.

So ergibt sich für vorliegende Erfindung die Aufgabe, eine Vorrichtung zu schaffen, mit deren Hilfe die Einfache Isolationsmasse in montagefreundlicher weise in die Hohlräume eingebracht werden kann. Diese gestellte Aufgabe wird mit einer Vorrichtung gemäß der Erfindung der eingangs erläuterten Art dadurch gelöst, daß die Isolationsmasse in für die Füllung des Hohlraumes ausreichender Menge in einem mit Öffnungsmitteln versehenen, flexiblen Behälter eingebracht ist, daß der Behälter an einer flexiblen, den zu füllenden Hohlraum überdeckenden Montagefolie befestigt ist und daß die Montagefolie entlang der Seitenränder Haftmittel aufweist.

Weiterhin ist Aufgabe der Erfindung, ein Verfahren zum Füllen der Hohlräume zu ermitteln, bei dem die erfindungsgemäße Vorrichtung Verwendung findet. Diese zweite Aufgabe wird gemäß der Erfindung nun dadurch gelöst, daß die Montagefolie mit den Haftmitteln an den seitlichen Begrenzungen des zu füllenden Hohlraumes als abschließende Hohlraumumhüllung befestigt wird, daß dann der die Isoliermasse enthaltende Behälter mit seinem Öffnungsmittel geöffnet wird, daß anschließend die aus dem Behälter austretende Isoliermasse mit Hilfe der umhüllenden Montagefolie von außen her in die Hohlräume eingeknetet wird und daß dann eine weitere, vorzugsweise - schrumpfbare Schutzhülle aufgebracht wird.

Ein Vorteil der Erfindung liegt nun darin, daß in besonders montagefreundlicher Weise die an sich sehr haftfähige Isolationsmasse ohne direkten Kontakt mit derselben in die Hohlräume eingeknetet werden kann. Von Vorteil ist nun ebenfalls, daß man auf diese Weise auf kostspielige Gußformen verzichten kann und das Verfahren lediglich mit Hilfe einer einfachen, konfektionierten Kunststofolie ausführen kann. Bei Verwendung einer durchsichtigen Montagefolie ist zudem besonders vorteilhaft, daß von außen sichtbar ist, wann die Hohlräume mit Isolationsmasse völlig gefüllt sind. Über dies Montagefolie hinweg können weitere Umhüllungen aufgebracht werden, die den entsprechenden Erfordernissen genügen. So bietet sich an, als weiteren Permeationsschutz und auch als Wärmeverteilelement eine Metallfolie auf die Montagefolie aufzubringen, die dann schließlich mit einer Schutzumhüllung, zum Beispiel mit einer - schrumpfbaren Schutzhülle versehen wird. Um die Montagefreundlichkeit weiter zu verbessern, ist die Isolationsmasse in besonderen Behältern untergebracht, die mit der Montagefolie verbunden werden und mit einfachen Öffnungsmitteln zur Freigabe der Isolationsmasse geöffnet werden können. Damit ist ein vorzeitiger Kontakt mit der Isolationsmasse verhindert. Um nun zu verhindern, daß zu viel Isolationsmasse an den Behältern hängen bleibt, wird die Isolationsmasse chemisch so eingestellt, daß die Kohäsion im Temperaturbereich -10° C bis + 50° C immer größer ist als die Adhäsion an der Montagefolie bzw. dem Behälter. Um die Adhäsion zwischen der Montagefolie und der Isolationsmasse zu verringern, kann man die Montagefolie bzw. den Behälter vor der Füllung mit Isolationsmasse mit speziellen Gleitmitteln, besonders mit Silicon behandeln. Vorteilhaft ist bei dieser Technik auch, daß man die Montagefolie in endloser Form konfektionieren kann, so daß jeweils die erforderliche Länge an Montagefolie abgeschnitten werden kann. Die Montagefolie kann selbstverständlich auch als Verbundfolie ausgebildet sein, die aus mehreren Schichten verschiedener Materialien besteht und dementsprechend den verschiedenen Erfordernissen entspricht. Vorteile ergeben sich auch dadurch, wenn durchsichtige Folien und transparente Massen verwendet werden. Auf diese Weise läßt sich besonders gut der Bearbeitungsvorgang beobachten.

Das Verfahren zum Füllen von Hohlräumen, insbesondere bei Kabelspleißen mit Hilfe der erfindungsgemäßen Vorrichtung beginnt damit, daß die Montagefolie, auf der der Behälter mit der Isolationsmasse befestigt ist, mit seinen seitlich angebrachten Haftmitteln an den seitlichen Begrenzungen des zu füllenden Hohlraumes befestigt wird, und zwar so, daß der zu füllende Hohlraum mit nach innen gekehrtem Behälter für die Isolationsmasse nach außen hin abgeschlossen ist. Kurz vor dem endgültigen Abschluß durch die Montagefolie wird der Behälter mit seinem Öffnungsmittel geöffnet, so daß anschließend mit Hilfe der Montagefolie von außen her die Isolationsmasse aus dem Behälter heraus und in den Hohlraum eingeknetet werden kann. Nachdem dieser Knetvorgang beendet ist, werden je nach Bedarf weitere Schutzhüllen aufgebracht, wobei schrumpfbare Schutzhüllen besonders einfach aufzubringen sind. Beim Aufbringen von schrumpfbaren Schutzhüllen ist zusätzlich von Vorteil, daß die Isolationsmasse besonders gleichmäßig verteilt wird. Die einzelnen, den verschiedenen Erfordernissen, wie Permeations-oder Wärmeschutz, entsprechenden Schutzhüllen können sowohl lagenweise oder gemeinsam als Verbundfolie aufgebracht werden.

Die Erfindung wird nun anhand von neun Figuren näher erläutert.

Figur 1 zeigt eine Draufsicht und

Figur 2 einen Querschnitt der Montagefolie mit einem aufgeschweißten Behälter für die Isolationsmasse.

Figur 3 veranschaulicht die kontinuierliche Aneinanderreihung mehrerer Montageeinheiten.

Figur 4 zeigt eine Draufsicht und

Figur 5 einen Querschnitt der Montagefolie mit aufgebrachtem beutelartigen Behälter für die Isolationsmasse.

Figur 6 zeigt eine Draufsicht und

Figur 7 einen Querschnitt der Montagefolie mit einem becherförmigen Behälter für die Isolationsmasse.

Figur 8 zeigt einen Kabelspleiß, der mit Hilfe einer Vorrichtung gemäß der Erfindung gefüllt wurde.

Figur 9 zeigt einen Behälter mit einem Druckverschluß.

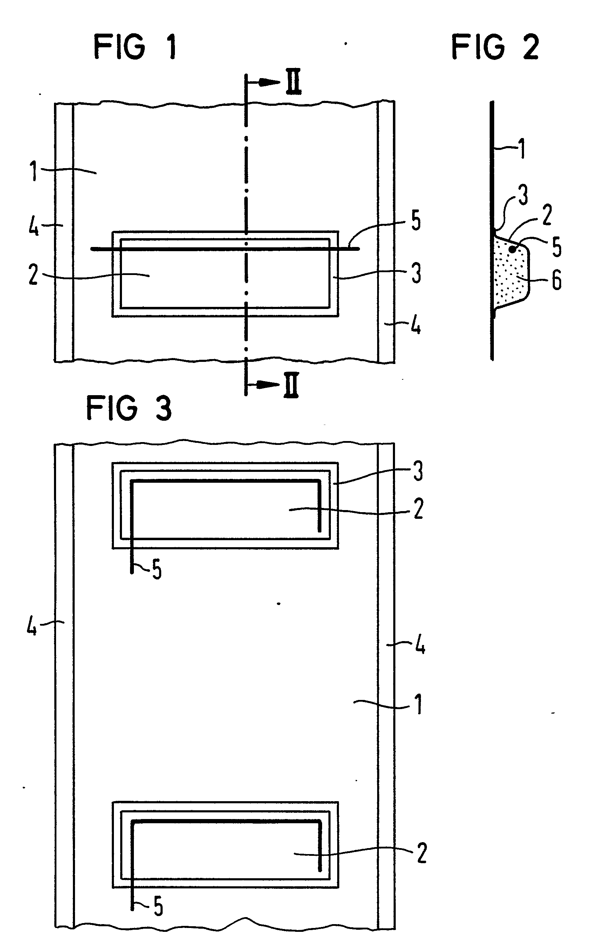

Figur 1 zeigt nun eine Montagefolie 1 die je nach dem zu umhüllenden Hohlraum in seiner Länge entsprechend beschnitten ist. Entlang der Längsränder sind nun die Haftmittel 4 in Form von selbstklebenden Streifen aufgebracht, mit deren Hilfe die Montagefolie 1 zu beiden Seiten des zu umhüllenden Hohlraums fixiert werden können. Bei Umhüllung eines Kabelspleißes wird demnach die Montagefolie den zu füllenden Hohlraum umgeben und mit seinen seitlichen Haftmitteln 4 auf den Kabelenden fixiert. Bevor die Montagefolie 1 völlig geschlossen wird, wird der Behälter 2 für die Isolationsmasse mit Hilfe des als Aufreißelement 5 ausgebildeten Öffnungsmittels geöffnet. Der Behälter 2 besteht in diesem Fall ebenfalls aus einer Folie, die entlang ihrer Ränder 3 mit der Montagefolie 1 verklebt oder verschweißt ist. Der Schnitt II-II deutet den Querschnitt an, wie er in Figur 2 dargestellt ist. Hier wird deutlich, daß die Montagefolie 1 den nach einer Seite hin abstehenden Behälter 2 trägt, der über seine Ränder 3 dichtend aufgeschweißt ist. In dem Behälter 2 befindet sich die Isolationsmasse 6, die in die Hohlräume eingeknetet werden soll, wobei vorher mit Hilfe des Aufreißelements 5 der Behälter geöffnet wird.

Die Figur 3 verdeutlicht nun eine fortlaufend konfektionierte Montagefolie 1, die mit mehreren Behältern 2 für die Isolationsmasse bestückt ist. Die Abstände der Behälter 2 sind dabei so gewählt, daß der dazwischen liegende Teil der Montagefolie 1 für die Umhüllung der gebräuchlichen Hohlräume ausreicht. Dabei sind auch die Haftmittel 4 in Form von Klebestreifen oder Klettstreifen entlang der Seitenränder der Montagefolie 1 durchlaufend aufgebracht, so daß bei jedem beliebigen Abschnitt die volle Haftfähigkeit an den Rändern gegeben ist. Die Klebestreifen sind zunächst mit einer Schutzfolie bedeckt. Das Aufreißelement 5 ist in diesem Ausführungsbeispiel als U-förmiger Reißfaden ausgebildet, so daß bei Betätigung drei Seiten des Behälters 2 geöffnet werden. Hierdurch läßt sich der Austritt der Isolationsmasse 6 verbessern.

Unter Ausnutzung einer größeren Cohäsion zwischen Isoliermasse und Montagefolie läßt sich auch ein "ölsardinenbüchsenartiges" Abnehmen als Foliendeckel durchführen, wenn alle vier Seiten des Behälters durch ein umlaufendes Aufreißelement aufgetrennt werden.

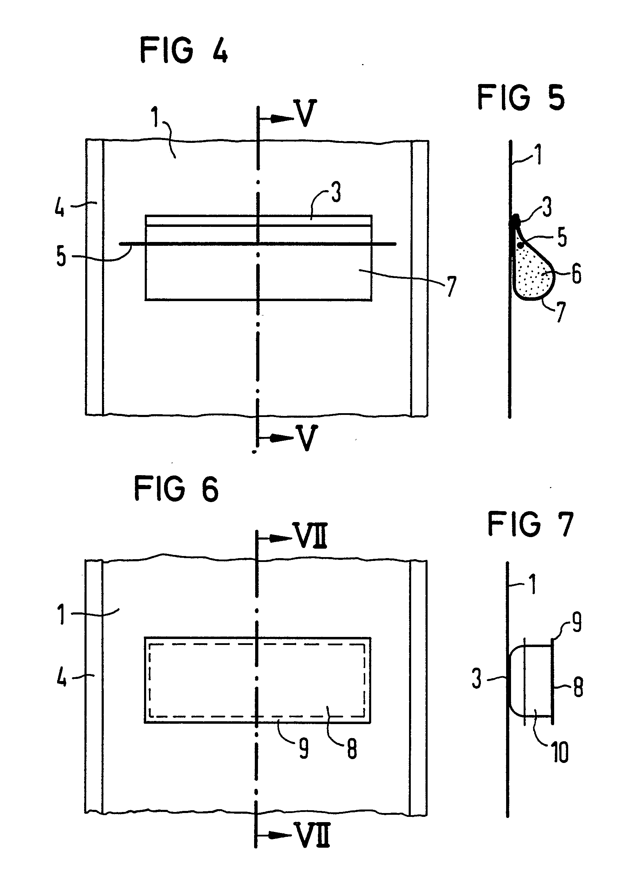

In Figur 4 ist ein Ausführungsbeispiel für die Vorrichtung gemäß der Erfindung dargestellt, bei dem die Isolationsmasse in einem Behälter 7, der als separater Beutel ausgebildet ist eingefüllt ist. Die Befestigung dieses Behälters 7 erfolgt entlang des Verschlußrandes 3 durch Verschweißen mit der Montagefolie 1. Außerdem ist ebenfalls ein Aufreißelement 5 in Form eines Reißfadens in dem Behälter 7 eingebracht. Der Arbeitsablauf mit dieser Variante der Vorrichtung erfolgt in der bereits beschriebenen Weise. Die Andeutung V-V für einen Querschnitt weist auf die Figur 5 hin, in der besonders die Ausbildung des beutelförmigen Behälters 7 mit der eingelagerten Isolationsmasse 6 hervortritt. Der Verschlußrand 3 des Behälters ist gleichzeitig mit der Montagefolie 1 verschweißt.

Das Ausführungsbeispiel nach Figur 6 und 7 ist im wesentlichen bestimmt durch die Art des Behälters 10, der sich von der Montagefolie 1 abhebt und entlang einer Befestigungslinie 3 wiederum mit dieser Montagefolie 1 befestigt ist. Der Behälter 10 weist als Aufreißelement einen Deckel 8 auf, der entlang des Randes 9 aufreißbar mit dem Gehäuseteil 10 verbunden ist. Dieser Deckel 8 ist wiederum in einer an sich bekannten Weise mit dem Behälter 10 verschweißt und weist zum Beispiel eine Lasche auf, mit deren Hilfe der Deckel bereits vor dem Umwickeln um den Spleiß abgezogen werden kann. Im einzelnen zeigt die Figur 6 die Draufsicht und die Figur 7 den in Figur 6 angedeuteten Schnitt VII-VII. Die sonstigen Montageverhältnisse gleichen den bereits beschriebenen.

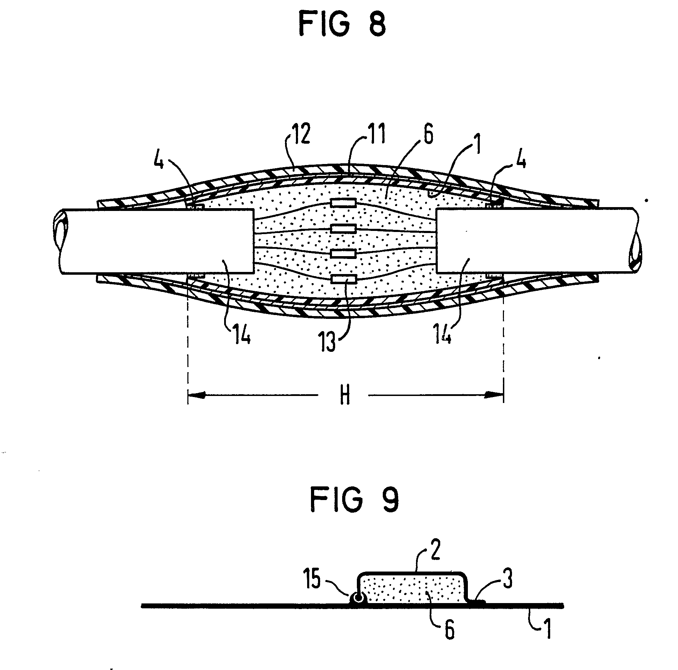

Figur 8 zeigt nun einen zwischen zwei Kabelenden 14 liegenden Kabelspleiß 13, der als Hohlraum H mit Hilfe der Vorrichtung und dem Verfahren gemäß der Erfindung mit einer Isolationsmasse 6 gefüllt ist. Daraus wird ersichtlich, daß die Montagefolie 1, die den hier nicht mehr sichtbaren Behälter 2 mit Isolationsmasse 6 enthielt, um den Kabelspleiß 13 herumgewickelt ist und an den Seitenrändern mit Hilfe der Haftmittel 4 auf den Kabelenden 14 fixiert ist. Durch entsprechendes Kneten von außen her wurde schließlich die Isolationsmasse 6 in den Kabelspleiß 13 lückenlos eingeknetet, ohne daß Isolationsmasse in störender Weise nach außen austreten konnte. Eine unerwünschte Verklebung oder Verunreinigung durch diese Isolationsmasse ist also auf diese Weise verhindert. Nachdem dieser Einknetvorgang, der bei durchsichtiger Montagefolie gut beobachtet werden kann, beendet ist, können weitere Funktions-oder Schutzhüllen aufgebracht werden. Es empfiehlt sich auch beispielsweise einen Masseverteilungs- und/oder Kompressionswickel anzubringen. Dieser Kompressionswickel wird vorzugsweise aus selbstklebendem Kunststoffband hergestellt, so daß ein Ausweichen bei dem sich durch das Aufwickeln erhöhenden Druck nicht erfolgen kann. Damit wird die Masse auch ins Kabel gedrückt. Anschließend wird in diesem Ausführungsbeispiel beispielsweise eine Metallfolie 11 als weiterer Permeations-und Wärmeschutz aufgebracht, die weiterhin mit einer aufgeschrumpften Schutzhülle 12 umgeben ist. Damit ist die Herstellung eines gefüllten Kabelspleißes beendet.

In Figur 9 wird in einem Querschnitt ein Ausführungsbeispiel gemäß der Erfindung gezeigt, bei dem als Öffnungsmittel ein Druck-insbesondere Rastverschluß 15 am Behälter 2 angeordnet ist. Dieser Druck-bzw. Rastverschluß 15 besteht im wesentlichen aus einer Hinterschneidung und einem zweiten Element, das in diese Hinterschneidung eingedrückt bzw. eingerastet wird. Hier ist dieser Verschluß am Rande des Behälters 2 angeordnet, doch ist die Anordnung an jeder anderen Stelle des Behälters möglich, als "Streifenöffnung" wie auch als "Umlauföffnung". Derartige Verschlüsse können auch in der Art der an sich bekannten "Schnappverschlüsse" ausgebildet werden, bei denen die beiden korrespondierenden Rastelemente mit Hilfe eines Druckelementes wie bei einem Reißverschluß ineinandergefügt werden. Diese Öffnungsmittel in Form solcher Verschlüsse sind besonders vorteilhaft, da sie aus dem gleichen Werkstoff wie der Behälter bzw. der Montagefolie hergestellt werden können und zwar im gleichen Arbeitsgang. Dadurch sind keine weiteren Zusätze in Form von Reißfäden oder ähnlichem mehr nötig. Weiterhin können auch Verschlüsse nach dem Prinzip des an sich bekannten Klettverschlusses oder mit Hilfe von Kontaktklebeflächen verwendet werden.

Je nach mechanischer Beanspruchung und der erforderlichen Dichtigkeit während der Lagerzeit kann das entsprechende Ausführungsbeispiel gewählt werden.

1 -Montagefolie

2 -Behälter

3 -Rand

4 - Haftmittel

5 -Aufreißelement

6 -Isolationsmasse

7 -Behälter

8 -Deckel

9 -Rand

10 -Behälter

11 -Metallfolie

12 -Schutzhülle

13 -Kabelspleiß

14 - Kabel

15 -Rastverschluß

H -Hohlraum

## Ansprüche

1. Vorrichtung zum Füllen von Hohlräumen, insbesondere bei Kabelgarnituren, mit Isolationsmasse zum Schutz gegen Feuchtigkeit, **dadurch gekennzeichnet**, daß die Isolationsmasse (6) in für die Füllung des Hohlraumes (H) ausreichender Menge in einem mit Öffnungsmitteln (5, 8, 15) versehenen, flexiblen Behälter (2, 7, 10) eingebracht ist, daß der Behälter (2, 7, 10) an einer flexiblen, den zu füllenden Hohlraum (H) überdeckenden Montagefolie (1) befestigt ist und daß die Montagefolie (1) entlang der Seitenränder Haftmittel (4) aufweist.

2. Vorrichtung nach Anspruch 1, **dadurch gekennzeichnet**, daß die Isolationsmasse (6) aus knetbarem, plastischem Material besteht.

3. Vorrichtung nach einem der vorhergehenden Ansprüche, **dadurch gekennzeichnet**, daß der Behälter (2) für die Isolationsmasse (6) als Folie auf die Montagefolie (1) aufgebracht, vorzugsweise aufgeschweißt ist.

4. Vorrichtung nach einem der vorhergehenden Ansprüche, **dadurch gekennzeichnet**, daß der Behälter (2, 7, 10) als Öffnungsmittel ein Aufreißelement, vorzugsweise einen Reißfaden (5) aufweist.

5. Vorrichtung nach einem der Ansprüche 1, 2 oder 4, **dadurch gekennzeichnet**, daß der Behälter (7) als Beutel auf der Montagefolie (1) befestigt ist.

6. Vorrichtung nach einem der Ansprüche 1 oder 2, **dadurch gekennzeichnet**, daß der Behälter (10) als Öffnungsmittel einen aufgeschweißten, aufreißbaren Deckel (8) aufweist.

7. Vorrichtung nach einem der Ansprüche 1 oder 2, **dadurch gekennzeichnet**, daß das Öffnungsmittel des Behälters (2, 7, 10) als Druckverschluß (15), vorzugsweise als Rastverschluß, ausgebildet ist.

8. Vorrichtung nach einem der vorhergehenden Ansprüche, **dadurch gekennzeichnet**, daß die Haftmittel (4) der Montagefolie (1) als selbstklebende Streifen aufgebracht sind.

9. Vorrichtung nach einem der vorhergehenden Ansprüche, **dadurch gekennzeichnet**, daß die Montagefolie (1) durchsichtig ist.

10. Vorrichtung nach einem der vorhergehenden Ansprüche, **dadurch gekennzeichnet**, daß die Isoliermasse (6) durchsichtig ist.

11. Vorrichtung nach einem der vorhergehenden Ansprüche, **dadurch gekennzeichnet**, daß die Montagefolie (1) von einer Metallfolie (11) abgedeckt ist.

12. Vorrichtung nach einem der vorhergehenden Ansprüche, **dadurch gekennzeichnet**, daß die Montagefolie als Verbundfolie aus mehreren Schichten verschiedener Materialien besteht.

13. Vorrichtung nach einem der vorhergehenden Ansprüche, **dadurch gekennzeichnet**, daß die Montagefolie (1) mindestens von einer schrumpfbaren Schutzhülle (12) umgeben ist.

14. Vorrichtung nach einem der vorhergehenden Ansprüche, **dadurch gekennzeichnet**, daß über der Montagefolie (1) ein Kompressionswickel, vorzugsweise aus einem selbstklebenden Kunststoffband, angeordnet ist.

15. Verfahren zum Füllen von Hohlräumen, insbesondere bei Kabelspleißen, mit Hilfe der Vorrichtung nach einem der vorhergehenden Ansprüche, **dadurch gekennzeichnet**, daß die Montagefolie (1) mit den Haftmitteln (4) an den seitlichen Begrenzungen des zu füllenden Hohlraumes (H) als abschließende Hohlraumumhüllung befestigt wird, daß dann der die Isoliermasse (6) enthaltende Behälter (2, 7, 10) mit seinem Öffnungsmittel (5, 8, 15) geöffnet wird, daß anschließend die aus dem Behälter (2, 7, 10) austretende Isoliermasse (6) mit Hilfe der umhüllenden Montagefolie (1) von außen her in den Hohlraum (H) eingeknetet wird und daß dann eine weitere, vorzugsweise schrumpfbare Schutzhülle (12) aufgebracht wird.

FIG 1

FIG 2

FIG 3

FIG 4

FIG 5

FIG 6

FIG 7

## FIG 8

## FIG 9